# EUROPEAN PATENT SPECIFICATION

(11) **EP 3 139 600 B1**
(45) Date of publication and mention of the grant of the patent: **30.09.2020**
(21) Application number: 14859314.8
(22) Date of filing: 30.09.2014
(51) Int. Cl.: H04N 9/31, G03B 21/14

(54) **PROJECTION METHOD**
PROJEKTIONSVERFAHREN
PROCÉDÉ DE PROJECTION

(30) Priority: 28.04.2014 CN 201410175303
(43) Date of publication of application: 08.03.2017
(73) Proprietor: BOE Technology Group Co., Ltd., Beijing 100015 (CN)
(72) Inventor: CHEN, Yanshun, Beijing 100176 (CN); ZHAO, Xingxing, Beijing 100176 (CN); XU, Qiushi, Beijing 100176 (CN); LI, Yaohui, Beijing 100176 (CN)
(74) Representative: Brötz, Helmut
(86) International application number: PCT/CN2014/087862
(87) International publication number: WO 2015/165209

(56) References cited:
- WO-A1-2013/052274
- CN-A- 1 296 192
- CN-A- 1 637 577
- CN-A- 1 790 095
- CN-A- 101 191 977
- CN-A- 103 974 047
- JP-A- 2005 049 604
- JP-A- 2006 093 821
- JP-A- 2011 064 859
- KR-A- 20130 121 526
- KR-A- 20130 121 526
- US-A1- 2005 046 804
- US-A1- 2011 007 035
- US-A1- 2011 075 102
- US-A1- 2013 257 702
- US-A1- 2015 208 019

## Description

### TECHNICAL FIELD

Embodiments of the present invention relate to a wearable projecting device and a focusing method, a projection method thereof.

### BACKGROUND

Wearable projecting device implements projection based on a particular background, namely a palm, as the screen for projection. A wearable projecting device is typically wearable on a finger in operation. Because relative position between the wearable projecting device and the palm surface often varies due to finger's shaking etc., the stability of definition in display of images projected onto the palm surface by the wearable projecting device is poor.
US 20110007035A1 discloses a finger-worn device and a related method of use.
US 20110075102 A1 discloses a projector device, a portable telephone and a camera. A projector device that generates a projection image, photographs this projection image and performs various adjustments to the projection image.
US 20050046804 A1 discloses a projector apparatus, a projection method and a recording medium storing projection method.

### SUMMARY

The present invention provides a projection method which realizes high stability of definition in display of images projected on to the palm surface by the wearable projecting device.

### BRIEF DESCRIPTION OF DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 is a flow chart of a focusing method provided in an embodiment of the present invention;
Fig. 2 is a flow chart of a projection method provided in an embodiment of the present invention;
Fig. 3 is a principle diagram of a wearable projecting device provided in an embodiment of the present invention; and
Fig. 4 is a light path diagram of a wearable projecting device provided in an embodiment of the present invention.

### DETAILED DESCRIPTION

The technical solutions of the embodiments will be described in a clearly and fully understandable way in connection with the drawings related to the embodiments of the invention. Any "examples" and "embodiments" of the description not falling within the scope of the claims do not form part of the invention and are provided for illustrative purposes only.

At least one embodiment of the present invention provides a wearable projecting device, a focusing method, and a projection method thereof. The images projected onto a palm surface by the wearable projecting device have high stability of definition in display when the wearable projecting device implements projection onto the palm using the above-mentioned focusing method and the projection method.

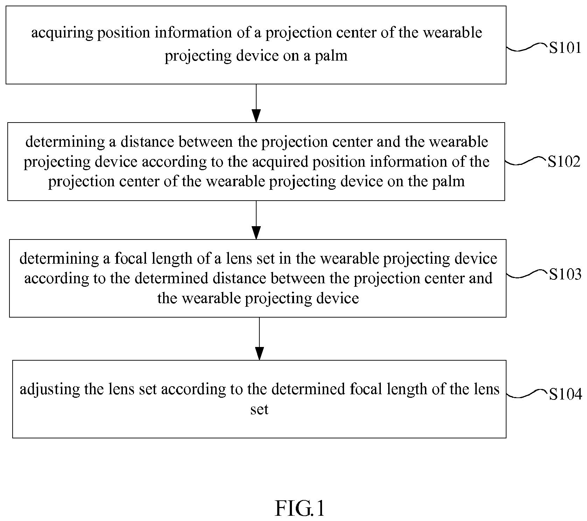

Refer to Fig. 1, which is a flow chart of the focusing method provided in one embodiment of the present invention.

The focusing method of a wearable projecting device according to the present embodiment includes carrying out the following steps at a pre-set frequency:
step S101, acquiring position information of the projection center of a wearable projecting device on a palm;
step S102, determining the distance between the projection center and the wearable projecting device according to the acquired position information of the projection center of the wearable projecting device on the palm;
step S103, determining the focal length of a lens set in the wearable projecting device according to the determined distance between the projection center and the wearable projecting device; and
step S104, adjusting the focal length of the lens set according to the determined focal length.

In the present embodiment, when the wearable projecting device implements projection after adjusting the focal length of the lens set with the above-mentioned focusing method, first of all, in step S101, the position information of the projection center of the wearable projecting device on the palm surface is acquired by for example a 3D (three dimension) camera and then transmitted to a processing module; in step S102, the distance between the projection center and the wearable projecting device is calculated by the processing module with a set frequency; in step S103, the focal length required by the lens set is determined according to the calculated distance between the projection center and the wearable projecting device and an adjusting signal is generated; and then in step S104, an adjusting device is controlled to adjust the focal length of the lens set of the wearable projecting device such that the focal length of the lens set is adjusted to correspond to the distance between the projection center and the wearable projecting device calculated by the processing module and the definition in display of images projected onto the palm by the wearable projecting device is improved.

Furthermore, when the wearable projecting device of the embodiment implements projection on a palm surface by the projection method using the above-mentioned focusing method, the processing module can control an adjusting device with a set frequency to adjust the focal length of a lens set, and therefore it is possible to adjust the focal length of the lens set in time when the finger position changes such that the stability of definition in display of images projected onto the palm surface by the wearable projecting device can be improved.

In one embodiment of the present invention, between two successive executions of steps S104 of adjusting a lens set according to the determined focal length of the lens set, the wearable projecting device is controlled to project at least two frames of images, and within the duration of the above-mentioned at least two frames of images, definition information of the projected image on the palm after one frame is projected is acquired. Then, it is determined whether the definition of projected image is within a predetermined range or not according to the acquired definition information of the projected image, and if not, the focal length of the lens set is corrected according to determined focal length correction information during the period of projecting the next frame of image.

In the above-mentioned focusing method in the embodiment of the present invention, during the time in which step S104 is executed twice successively, it is possible to acquire the definition information of one frame of image projected onto the palm surface by the wearable projecting device by means of, for example, an RGB camera. Then, the acquired definition information signal is transmitted to the processing module that determines whether the definition of projected image is within a predetermined range or not according to the acquired definition information of the projected image. If it is determined that the definition is not within a determined threshold range, which indicates the focal length of the lens set is not correctly adjusted, then the processing module corrects the focal length of the lens set according to the determined focal length correction information in the projection period for the next frame, for example, by allowing the displayed images to approach the most clear state in the period of a plurality of frames in an approaching manner, thereby guaranteeing the definition of images displayed on palm by the wearable projecting device.

An RGB camera uses three different cables to output three fundamental color components and generally uses three independent sensors (CCD or CMOS) to acquire three color signals. Therefore, RGB cameras are often used for accurate color image acquisition. Other kinds of cameras may also be used in embodiments of the present invention to acquire images for analysis and determination of definition in display.

In the focusing method provided in one embodiment of the present invention, the frequency at which the above-mentioned steps S102, s103 and S104 are executed is set to be 30 Hz.

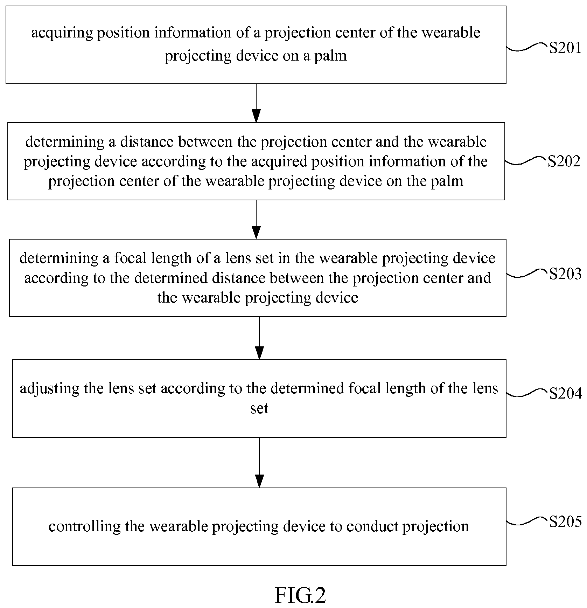

As shown in Fig. 2, on the other hand, an embodiment of the present invention provides a projection method including carrying out the following steps at a set frequency:
step S201, acquiring position information of the projection center of the wearable projecting device on a palm;
step S202, determining the distance between the projection center and the wearable projecting device according to the acquired position information of the projection center of the wearable projecting device on the palm;
step S203, determining the focal length of a lens set in the wearable projecting device according to the determined distance between the projection center and the wearable projecting device;
step S204, adjusting the focal length of the lens set according to the determined focal length; and
step S205, controlling the wearable projecting device to conduct projection.

In the present embodiment, when the wearable projecting device implements projection by the above-mentioned projection method, first of all, in step S201, the position information of the projection center of the wearable projecting device on the palm surface is acquired by means of for example a 3D camera and then transmitted to a processing module; in step S202, the distance between the projection center and the wearable projecting device is calculated by the processing module with a set frequency; in step S203, a focal length required by the lens set is determined according to the calculated distance between the projection center and the wearable projecting device and an adjusting signal is generated; and then in step S204, an adjusting device is controlled to adjust the focal length of the lens set of the wearable projecting device such that the focal length of the lens set is adjusted to correspond to the distance between the projection center and the wearable projecting device calculated by the processing module; then in step S205, the wearable projecting device is controlled to conduct projection such that the definition of images projected onto the palm by the wearable projecting device is improved accordingly.

Furthermore, when the wearable projecting device of the embodiment implements projection on a palm surface by the above-mentioned projection method, the processing module can control an adjusting device at a set frequency to adjust the focal length of a lens set, and therefore it is possible to adjust the focal length of the lens set in time when the finger position changes such that the stability of definition in display of images projected onto the palm surface by the wearable projecting device can be improved as well.

In one embodiment of the present invention, between two successive executions of steps S204 of adjusting a lens set according to the determined focal length of the lens set, the wearable projecting device is controlled to project at least two frames of images, and within the duration of the above-mentioned at least two frames of images, the definition information of a projected image on the palm after one frame is projected is further acquired. It is determined whether the definition of projected image is within a predetermined range or not according to the acquired definition information of the projected image, and if not, the focal length of the lens set is corrected according to determined focal length correction information during the period of projecting the next frame of image.

In the above-mentioned projection method in the embodiment of the present invention, during the time period in which step S204 is executed twice successively, it is possible to acquire the definition information of one frame of image projected onto the palm surface by the wearable projecting device by means of, for example, an RGB camera. Then the acquired definition information is transmitted to the processing module. The processing module determines whether the definition of projected image is within the predetermined range or not according to the acquired definition information of the projected image. If it is determined that the definition is not within the set threshold range, which indicates the focal length of the lens set is not correctly adjusted, then the processing module corrects the focal length of the lens set according to the determined focal length correction information in the projection period for the next frame, for example, by allowing the displayed images to approach the most clear state in the period for a plurality of frames by an approaching manner, thereby guaranteeing the definition of images displayed on palm by the wearable projecting device.

In the focusing method provided in at least one embodiment of the present invention, the frequency at which the above-mentioned steps S202, S203 and S204 are executed is set to be 30 Hz, and the frequency at which step S205 is executed is 60Hz.

In at least one embodiment of the present invention, in the above-mentioned step S202, determining the distance between the projection center and the wearable projecting device according to the acquired position information of the projection center, on the palm, of the wearable projecting device may be implemented as follows. First of all, a space coordinates system with an origin at the location of the wearable projecting device is established. Then, the coordinates of the projection center in the space coordinate system is determined according to the acquired position information of the projection center. Thereafter, the distance between the projection center and the wearable projecting device is determined according to the determined coordinates of the projection center and the determined origin coordinates.

In the embodiment of the present invention, the processing module may be implemented by for example a general purpose computer or a dedicated computer (for example DSP).

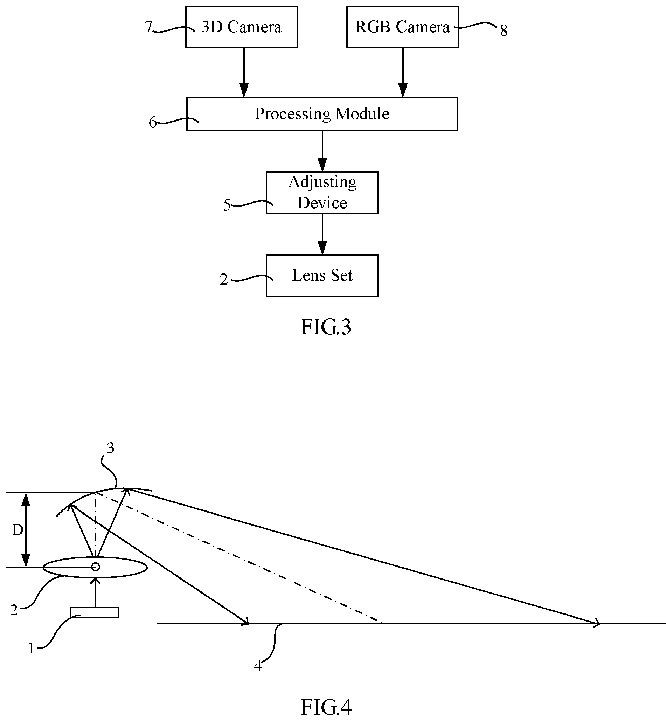

In addition, as shown in Fig. 3, an embodiment of the present invention further provides a wearable projecting device, which comprises: a rack; a lens set 2 mounted on the rack; an adjusting device 5 mounted on the rack and operating for adjusting the focal length of the lens set 2; a 3D camera 7 mounted on the rack for acquiring position information of the projection center, on a palm, of the wearable projecting device; and a processing module 6 in signal connection with the 3D camera 7 and the adjusting device 5.

The processing module 6 is configured to carry out the following operations at a set frequency: determining the distance between the projection center and the wearable projecting device according to the acquired position information of the projection center, on the palm, of the wearable projecting device; and determining the focal length of the lens set 2 in the wearable projecting device according to the determined distance between the projection center and the wearable projecting device and controlling the adjusting device 5 to adjust the focal length of the lens set 2 according to the control signal.

For example, the above-mentioned wearable projecting device may further include an RGB camera 8 in signal connection with the processing module and for acquiring definition information of images projected onto the palm after projecting each frame of image. In the embodiment, the processing module 6 may further have the following function(s): determining whether the definition of projected image is within a predetermined range or not according to the definition information of the projected image acquired by the RGB camera 8, and if not, controlling the adjusting device 5 to correct the focal length of the lens set 2 during the period of projecting the next frame according to determined focal length correction information.

For example, the above-mentioned 3D camera 7 may be a structured-light camera, a TOF (time-of-flight) camera, a binocular camera or the like.

For example, the above-mentioned adjusting device 5 is a stepping motor.

The operation process of the above-mentioned wearable projecting device is described in the projection method provided in the above-mentioned embodiments, and will not be described any more here.

As shown in Fig. 4, the above-mentioned wearable projecting device according to one embodiment of the present invention may further include an arc-shaped reflector 3 on the light-emitting side of the lens set 2. The distance D between the reflector 3 and the lens set 2 is greater than or equal to two times the focal length of the lens set 2. The light-emitting direction of the lens set 2 is away from the palm surface 4, and the projection light emitted from the lens set 2 is reflected by the reflector 3 and irradiates on the palm surface 4, thereby forming a projection pattern on the palm surface 4.

During the time period when the above-mentioned wearable projecting device is implementing projection, the light emitted from the light-emitting module 1 (e.g., an LED) on the light entering side of the lens set 2, after passing through the lens set 2, irradiates the reflector 3 first, and then is reflected by the reflector 3 toward the palm surface 4, thereby reducing the path length of the light emitted from the light-emitting module 1 in the wearable projecting device after passing through the lens set 2, and in turn reducing the path length required by light after exiting the wearable projecting device, resulting in a reduced distance between the wearable projecting device and the palm surface 4 while projecting.

For example, a lens set 2 with a focal length less than or equal to 5 mm can enable the above-mentioned wearable projecting device to conduct projection within 3∼10 cm.

What are described above is related to the illustrative embodiments of the disclosure only and not limitative to the scope of the disclosure; the scopes of the disclosure are defined by the accompanying claims.

## Claims

1. A projection method of a wearable projecting device comprising carrying out the following steps at a set frequency:
(S201): acquiring position information of a projection center of the wearable projecting device on a palm;
(S202): determining a distance between the projection center and the wearable projecting device according to the acquired position information of the projection center of the wearable projecting device on the palm of a hand;
(S203): determining a focal length of a lens set (2) in the wearable projecting device according to the determined distance between the projection center and the wearable projecting device;
(S204): adjusting the lens set (2) according to the determined focal length of the lens set (2); and
(S205): controlling the wearable projecting device to conduct projection,
**characterized in that**:
between two successive executions of the step (s204) of adjusting the lens set (2) according to the determined focal length of the lens set (2), the wearable projecting device is controlled to project at least two frames of images, and within a duration of the at least two frames of images, the method further comprises:
acquiring definition information of an image projected on the palm after one frame of the at least two frames of images is projected;
determining whether the definition of the projected image is within a predetermined range or not according to the acquired definition information of the projected image, and if the definition is not within the predetermined range, determining focal length correction information during the period of projecting the next frame of the at least two frames of images, and correcting the focal length of the lens set according to the determined focal length correction information.

2. The projection method of claim 1, wherein: the set frequency is 30 Hz; and the step of controlling the wearable projecting device to conduct projection includes controlling the wearable projecting device to conduct projection at a projection frequency of 60 Hz.

## Patentansprüche

1. Projektionsverfahren einer tragbaren Projektionsvorrichtung, umfassend das Ausführen der folgenden Schritte bei einer bestimmten Frequenz:
(S201): Beschaffung von Positionsinformation von einem Projektionszentrum der tragbaren Projektionsvorrichtung auf einer Handfläche;
(S202): Bestimmung eines Abstandes zwischen dem Projektionszentrum und der tragbaren Projektionsvorrichtung gemäß der beschafften Positionsinformation des Projektionszentrums der tragbaren Projektionsvorrichtung auf der Handfläche einer Hand;
(S203): Bestimmung einer fokalen Länge eines Linsensets (2) in der tragbaren Projektionsvorrichtung gemäß des bestimmten Abstandes zwischen dem Projektionszentrum und der tragbaren Projektionsvorrichtung;
(S204): Einstellen des Linsensets (2) gemäß der bestimmten fokalen Länge des Linsensets (2); und
(S205): Steuern der tragbaren Projektionsvorrichtung, um Projektion auszuführen,
**dadurch gekennzeichnet:**
**dass** zwischen zwei sukzessiven Ausführungen des Schrittes (S204) des Einstellens des Linsensets (2) gemäß der bestimmten fokalen Länge des Linsensets (2) die tragbare Projektionsvorrichtung gesteuert wird, um zumindest zwei Bildfelder zu projizieren, und wobei innerhalb einer Dauer von zumindest zwei Bildfeldern das Verfahren außerdem umfasst:
Beschaffen von Definitionsinformation von einem auf die Handfläche projizierten Bild nachdem ein Feld von den zumindest zwei Bildfeldern projiziert worden ist;
Bestimmen, ob die Definition des projizierten Bildes innerhalb eines vorbestimmten Bereichs oder nicht ist gemäß der beschafften Definitionsinformation des projizierten Bildes, und wenn die Definition nicht innerhalb des vorbestimmten Bereiches ist, Bestimmen einer fokalen Längenkorrekturinformation während der Periode des Projizierens des nächsten Feldes von den zumindest zwei Bildfeldern, und Korrigieren der fokalen Länge des Linsensets gemäß der bestimmten fokalen Längenkorrekturinformation.

2. Projektionsverfahren gemäß Anspruch 1, wobei die bestimmte Frequenz 30 Hz beträgt; und wobei der Schritt des Steuerns der tragbaren Projektionsvorrichtung, um Projektion auszuführen, das Steuern der tragbaren Projektionsvorrichtung, um Projektion bei einer Projektionsfrequenz von 60 Hz auszuführen, einschließt.

## Revendications

1. Procédé de projection d'un dispositif de projection portable comprenant la réalisation des étapes suivantes à une fréquence définie :
(S201) : l'acquisition d'informations de position d'un centre de projection du dispositif de projection portable sur une paume ;
(S202) : la détermination d'une distance entre le centre de projection et le dispositif de projection portable en fonction des informations de position acquises du centre de projection du dispositif de projection portable sur la paume d'une main ;
(S203) : la détermination d'un distance focale d'un jeu de lentilles (2) dans le dispositif de projection portable en fonction de la distance déterminée entre le centre de projection et le dispositif de projection portable ;
(S204) : le réglage du jeu de lentilles (2) en fonction de la distance focale déterminée du jeu de lentilles (2) ; et
(S205) : le contrôle du dispositif de projection portable pour effectuer la projection,
**caractérisé en ce que** :
entre deux exécutions successives de l'étape (S204) de réglage du jeu de lentilles (2) en fonction de la distance focale déterminée du jeu de lentilles (2), le dispositif de projection portable est contrôlé pour projeter au moins deux vues d'images, et dans les limites d'une durée des au moins deux vues d'images, le procédé comprend en outre :
l'acquisition d'informations de définition d'une image projetée sur la paume après la projection d'une vue des au moins deux vues d'images ;
la détermination si, oui ou non, la définition de l'image projetée est dans les limites d'une plage prédéterminée en fonction des informations de définition acquises de l'image projetée, et si la définition n'est pas dans les limites de la plage prédéterminée, la détermination d'informations de correction de distance focale pendant la période de projection de la vue suivante des au moins deux vues d'images, et la correction de la distance focale du jeu de lentilles en fonction des informations de correction de distance focale déterminées.

2. Procédé de projection selon la revendication 1, dans lequel : la fréquence définie est de 30 Hz ; et l'étape de contrôle du dispositif de projection portable pour effectuer la projection comprend le contrôle du dispositif de projection portable pour effectuer la projection à une fréquence de projection de 60 Hz.
